# EUROPEAN PATENT APPLICATION

(11) **EP 3 392 030 A1**
(43) Date of publication of application: **24.10.2018**
(21) Application number: 18163531.9
(22) Date of filing: 23.03.2018
(51) Int. Cl.: B31B 50/26, B31B 50/04, B31B 50/02, B65G 37/00, B65G 43/10

(54) **METHOD OF SYNCHRONIZING CONVEYING UNITS IN A PACKAGING MACHINE**

(30) Priority: 19.04.2017 EP 17167139
(71) Applicant: Tetra Laval Holdings & Finance S.A., 1009 Pully (CH)
(72) Inventor: NILSSON, Fredrik, 22221 Lund (SE); NILSSON, Jonas, 218 40 Bunkeflostrand (SE); DARMELL, Mattias, 21149 MALMÖ (SE); LINDÈN, Staffan, 26493 Klippan (SE)
(74) Representative: Tetra Pak - Patent Attorneys SE

(57) **Abstract**

A method in a packaging machine apparatus is disclosed. The packaging machine apparatus comprises a feed belt, a discharge device, and a drive chain cooperating with, and arranged between, the feed belt and the discharge device. The method comprises aligning the discharge device with respect to the drive chain to create a first path, through the discharge device, along which the drive chain can freely move, and aligning the drive chain with respect to the feed belt to create a predetermined first overlapping trajectory of the drive chain and the feed belt. The method further comprising aligning the drive chain with respect to the discharge device, while maintaining said first overlapping trajectory, to create a second path through the drive chain along which the discharge device can freely move. A packaging machine apparatus is also disclosed.

## Description

### Technical Field

The present invention generally relates to the field of packaging machine systems and devices thereof for manipulating packaging containers in such systems. More particularly, the present invention relates to a packaging machine apparatus and a related method.

### Background

In the field of packaging machine systems various devices and methods exists for manipulating packaging material such as folding the packaging material into packaging containers as the packaging material is transported throughout the process line. A packaging machine apparatus for folding the packaging material into such containers, i.e. a folding apparatus, typically comprises several cooperating units, such as feed belts, drive chains and discharge devices, each manipulating and/or conveying the packaging material along the folding process line.

Problems with systems for manipulating the packaging material, such as the mentioned folding apparatuses, include cumbersome alignment procedures of the various cooperating units thereof before the actual manipulation of the material is started in the apparatus. In particular, as the speed by which the package folding line operates is increased, along with the desire for higher-throughput systems, the demands on synchronization and better tolerances are increased. Misaligned and out-of-synch units of the folding line typically occurs as the folding apparatus is started from zero, e.g. after a cleaning cycle or if the folding apparatus has been powered off. Thus, before assuming normal operation, the interrelated units of the apparatus need to be synchronized, e.g. with physical templates that align the units, which is a time-consuming procedure. Significant resources may accordingly be required for maintenance of such units, which may limit the throughput of the production line. Further issues with previous solutions relate to complex alignment procedures of the interrelated units, e.g. when performing maintenance, which will add to the amount of resources required to keep the production line running. Manual alignment may further not be ultimately reliable. Problems with previous solutions thus include complex, time-consuming and sub-optimal synchronization.

Hence, an improved method in a packaging machine apparatus would be advantageous and in particular allowing for avoiding more of the above mentioned problems and compromises, including improving the synchronization of the packaging machine apparatus. A related packaging machine apparatus would also be advantageous.

### Summary

Accordingly, examples of the present invention preferably seek to mitigate, alleviate or eliminate one or more deficiencies, disadvantages or issues in the art, such as the above-identified, singly or in any combination by providing a device according to the appended patent claims.

According to a first aspect a method in a packaging machine apparatus is provided. The packaging machine apparatus comprises a feed belt, a discharge device, and a drive chain cooperating with, and arranged between, the feed belt and the discharge device. The method comprises aligning the discharge device with respect to the drive chain to create a first path, through the discharge device, along which the drive chain can freely move, and aligning the drive chain with respect to the feed belt to create a predetermined first overlapping trajectory of the drive chain and the feed belt. The method further comprising aligning the drive chain with respect to the discharge device, while maintaining said first overlapping trajectory, to create a second path through the drive chain along which the discharge device can freely move.

According to a second aspect a computer program product is provided comprising instructions which, when the program is executed by a computer, cause the computer to carry out the steps of the method according to the first aspect.

According to a third aspect a packaging machine apparatus is provided. The packaging machine apparatus comprises a feed belt, a discharge device, a drive chain cooperating with, and arranged between, the feed belt and the discharge device. The packaging machine apparatus further comprising a control unit configured to align the discharge device with respect to the drive chain to create a first path through the discharge device along which the drive chain can freely move. The control unit is configured to align the drive chain with respect to the feed belt to create a predetermined first overlapping trajectory of the drive chain and the feed belt. The control unit is configured to align the drive chain with respect to the discharge device, while maintaining said first overlapping trajectory, to create a second path through the drive chain along which the discharge device can freely move.

Further examples of the invention are defined in the dependent claims, wherein features for the second aspect of the disclosure are as for the first aspect mutatis mutandis.

Some examples of the disclosure provide for a facilitated synchronization of a packaging machine apparatus such as a folding apparatus.

Some examples of the disclosure provide for less time-consuming synchronization of a packaging machine apparatus such as a folding apparatus.

Some examples of the disclosure provide for a more reliable and accurate synchronization of a packaging machine apparatus such as a folding apparatus.

Some examples of the disclosure provide for less complex maintenance of a packaging machine apparatus such as a folding apparatus.

Some examples of the disclosure provide for facilitated and improved alignment of the cooperating units in a packaging machine apparatus conveying and/or folding packaging material.

Some examples of the disclosure provide for decreasing the risk of mechanical interference of the cooperating units in a packaging machine apparatus such as a folding apparatus conveying and/or folding packaging material.

Some examples of the disclosure provide for a packaging machine apparatus such as a folding apparatus which is more robust in terms of maintaining the synchronization of the cooperating units thereof in a high-speed production line.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which;
Fig. 1 is a schematic illustration of a packaging machine apparatus, in a top-down view, according to one example;
Fig. 2 is a schematic illustration of the packaging machine apparatus in Fig. 1 in a side view, according to one example;
Fig. 3 is a schematic illustration of the packaging machine apparatus in Fig. 1, in the same top-down view, at a later point in time, according to one example;
Fig. 4 is a schematic illustration of the packaging machine apparatus in Fig. 3 in a side view, according to one example; and
Fig. 5 is a flowchart of a method in a packaging machine apparatus, according to one example.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

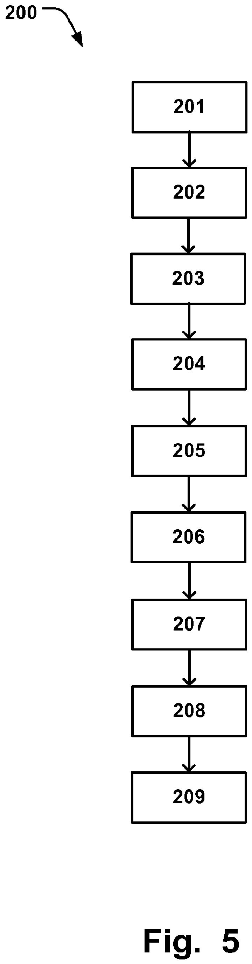

Fig. 5 illustrates a flow chart of a method 200 in a packaging machine apparatus 100. The order in which the steps of the method 200 are described and illustrated should not be construed as limiting and it is conceivable that the steps can be performed in varying order.

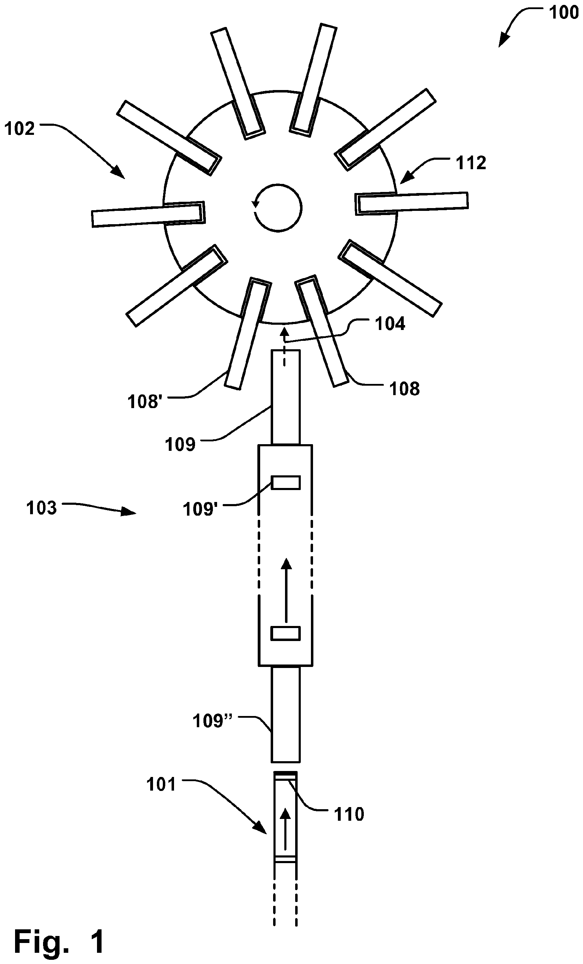

A packaging machine apparatus 100 is schematically illustrated in Figs. 1 - 4. The packaging material is not shown for clarity of presentation of the packaging machine apparatus 100 described in the present disclosure. It should be understood that, in use, after carrying out the steps of the method 200 in the apparatus 100 and when production is started, the packaging material is transported from carriers 110 on a feed belt 101 to conveyor units 109, 109', 109", of a drive chain 103. The packaging material is further transported from the conveyor units 109, 109', 109", to elongated raiser units 108 of a discharge device 102. The packaging material may comprise a laminated material for a variety of packages such as food packages.

The packaging machine apparatus 100 thus comprises a feed belt 101, a discharge device 102, and a drive chain 103 cooperating with, and arranged between, the feed belt 101 and the discharge device 102.

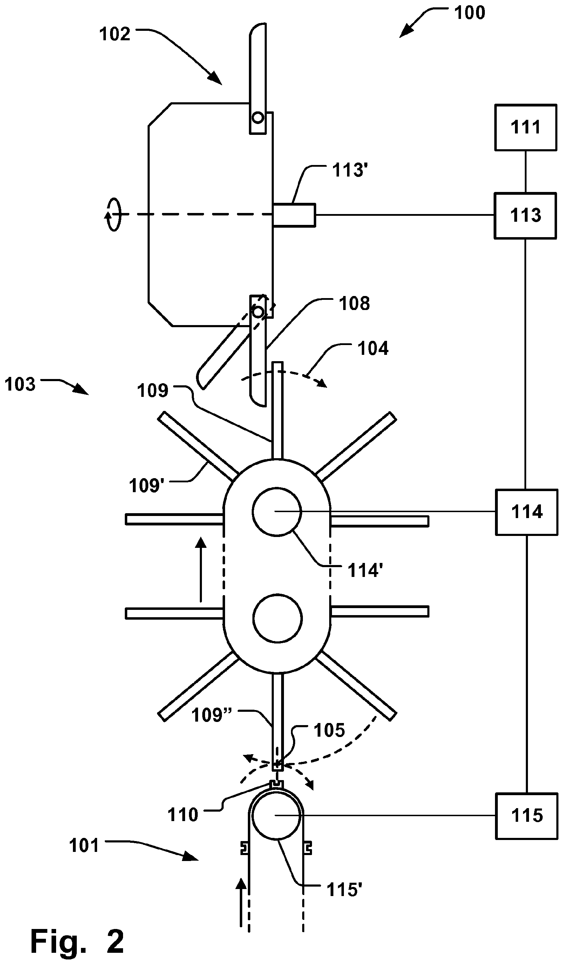

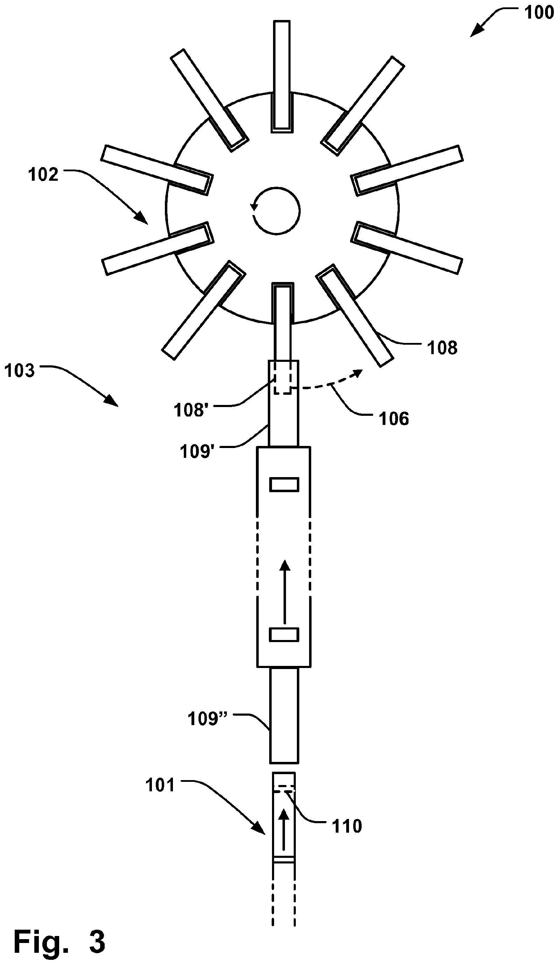

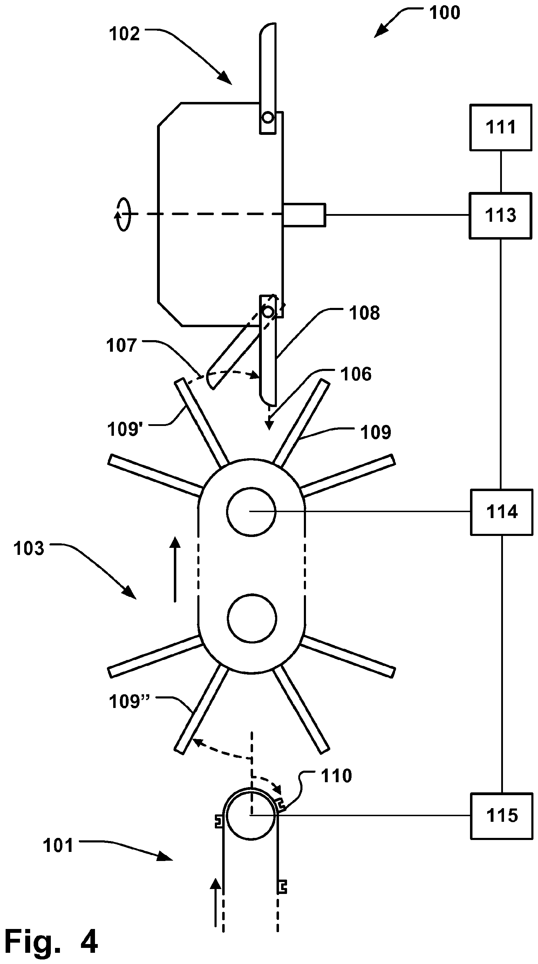

The method 200 comprises aligning 201 the discharge device 102 with respect to the drive chain 103 to create a first path 104 through the discharge device 102, along which the drive chain 103 can freely move. The movement of the discharge device 102 and the drive chain 103 overlaps, but as Fig. 1 schematically illustrates, a first path 104 is created for the drive chain 103 to move through the discharge device 102, without mechanical interference therewith. Fig. 2 schematically illustrates a side-view of 90 degree rotation of the view in Fig. 1, where the trajectory of the first path 104 is shown, further illustrating that the drive chain 103 is movable through or past the discharge device 102 without mechanical interference. The method 200 comprises
aligning 203 the drive chain 103 with respect to the feed belt 101 to create a predetermined first overlapping trajectory 105 of the drive chain 103 and the feed belt 101. The drive chain 103 and/or the feed belt 101 is thus moved so that the drive chain 103 and the feed belt 101 has an overlapping trajectory 105, allowing for a common predefined position to be reached at a desired moment in time. The method 200 comprises aligning 205 the drive chain 103 with respect to the discharge device 102, while maintaining the first overlapping trajectory 105, to create a second path 106 through the drive chain 103 along which the discharge device 102 can freely move. Figs. 3 - 4 schematically illustrate the packaging machine apparatus 100 in a configuration which is subsequent to that of Figs. 1 - 2. The discharge device 102 moves along the second path 106 through the drive chain 103, without mechanical interference with the drive chain 103, as schematically illustrated in the top-down view of Fig. 3, and further in the side-view of Fig. 4. While creating the second path 106, the first overlapping trajectory 105 of the drive chain 103 and the feed belt 101 is maintained. I.e. the drive chain 103 and the feed belt 101 will still reach a predefined common point or relative alignment along the overlapping trajectory 105 while aligning the drive chain 103 with respect to the discharge device 102 so that the latter does not encounter any mechanical interference along the second path 106. This allows for a facilitated synchronization between the drive chain 103 and the discharge device 102 while maintaining synchronization with the feed belt 101. The risk for mechanical interference is minimized and the accuracy of the alignment of the cooperating units can be improved.

The method 200 may subsequently comprise aligning 208 the discharge device 102 with respect to the drive chain 103 to create a predetermined second overlapping trajectory 107 of the discharge device 102 and the drive chain 103. I.e. creating the second overlapping trajectory 107 may follow the alignment of the drive chain 103 with respect to the discharge device 102 while maintaining said first overlapping trajectory 105 to create the second path 106 through the drive chain 103 along which the discharge device can 102 freely move. The discharge device 102 and/or the drive chain 103 is thus moved so that the discharge device 102 and the drive chain 103 has an overlapping second trajectory 107, allowing for a common predefined position to be reached at a desired moment in time to allow for transfer of packaging material therebetween. The overlapping second trajectory 107 is schematically illustrated in Fig. 4. An advantageous and facilitated synchronization of the packaging apparatus 100 is thus achieved, providing for reducing maintenance times, since manual alignment is not required. This also provides for a packaging machine apparatus 100, such as a folding apparatus, which is more robust in terms of maintaining the synchronization of the cooperating units thereof in a high speed production line.

Aligning of the discharge device 102 with respect to the drive chain 103 to create the first path 104 through the discharge device 102 along which the drive chain 103 can freely move may comprise aligning 202 elongated raiser units 108, 108', of the discharge device by rotating the discharge device 102 to create the first path 104 between the elongated raiser units 108, 108'. The discharge device 102 may thus be rotating about a rotational axis and has elongated raiser units along its periphery 112 for interacting with the packaging containers. Each of the elongated raiser units 108, 108', may pivot relative to the rotary discharge device 102 and engage with a respective packaging container to affect the orientation thereof. Fig. 1 illustrates an example where the elongated raiser units 108, 108', are aligned so that a first path 104 is created between the longitudinal extensions of the raiser units 108, 108'. The drive chain 103 can thus move between the raiser units 108, 108', along the first path 104 without mechanical interference, thus providing for a facilitated and improves automated synchronization method of the packaging machine apparatus 100.

Aligning the drive chain 103 with respect to the feed belt 101 to create the predetermined first overlapping trajectory 105 of the drive chain 103 and the feed belt 101 may comprise aligning 204 relative positions between elongated conveyor units 109, 109', 109", of the drive chain 103 and carriers 110 of the feed belt 101 so that packaging material can be conveyed from the carriers 110 to the conveyor units 109, 109', 109", along the first overlapping trajectory 105. Fig. 2 illustrates one example where the position of a first conveyor unit 109" is aligned with the position of a first carrier 110 according to the overlapping first trajectory 105, to achieve synchronization therebetween.

Aligning the drive chain 103 with respect to the discharge device 102, while maintaining the first overlapping trajectory 105, to create the second path 106 through the drive chain 103 along which the discharge device 102 can freely move may comprise aligning 206 relative positions between elongated conveyor units 109, 109', of the drive chain 103 and elongated raiser units 108 of the discharge device 102 by adjusting the position of the conveyor units 109, 109', along the drive chain 103 to create said second path 106 between the conveyor units 109, 109'. Fig. 4 illustrates an example where the positions of the conveyor units 109, 109', have been further advanced compared to the positions illustrated in Fig. 2, in order to create the second path 106 between the conveyor units 109, 109'. The discharge device 102 can thus freely move along the second path 106, providing for facilitated synchronization thereof while maintaining the first overlapping trajectory 105 between the drive chain 103 and the feed belt 101. The method 200 thus allows for an efficient and less time-consuming sequence of synchronization steps of the plurality of interrelated units of the packaging machine apparatus 100. Such optimized synchronization is critical in order to achieve high throughput in high speed packaging machine systems, such as folding systems.

Maintaining the first overlapping trajectory 105 may comprise moving 207 the carriers 110 along with the adjustment of the position of the conveyor units 109, 109', 109", so that packaging material, in use, can be conveyed from the carriers 110 to the conveyor units 109, 109', 109", along the first overlapping trajectory 105. Thus, as the conveyor units 109, 109', 109", in the example of Fig. 4, moves with the drive chain 103 to be aligned to create the second path 106, the carrier 110 moves with the feed belt 101 so that a subsequent carrier overlaps with the position of a subsequent conveyor unit, along the first overlapping trajectory 105. Alignment between the carriers 110 and the conveyor units 109, 109', 109", is thus maintained.

Aligning the discharge device 102 with respect to the drive chain 103 to create the predetermined second overlapping trajectory 107 of the discharge device 102 and the drive chain 103 may comprise aligning 209 relative positions between elongated raiser units 108 of the discharge device 102 and elongated conveyor units 109, 109', of the drive chain 103 by rotating the discharge device 102 so that packaging material, in use, can be conveyed from the conveyor units 109, 109', to the raiser units 108, 108', along the second overlapping trajectory 107. Efficient synchronization of the raiser units 108, 108', with the movement of the conveyor units 109, 109', is thus provided.

Thus, a packaging machine apparatus 100 is provided. The packaging machine apparatus 100 comprises a feed belt 101, a discharge device 102, a drive chain 103 cooperating with, and arranged between, the feed belt 101 and the discharge device 102. The packaging machine apparatus 100 comprises a control unit 111 configured to align 201 the discharge device 102 with respect to the drive chain 103 to create a first path 104 through the discharge device 102 along which the drive chain 103 can freely move. The control unit 111 is configured to align 203 the drive chain 103 with respect to the feed belt 101 to create a predetermined first overlapping trajectory 105 of the drive chain 103 and the feed belt 101. The control unit 111 is further configured to align 205 the drive chain 103 with respect to the discharge device 102, while maintaining the first overlapping trajectory 105, to create a second path 106 through the drive chain 103 along which the discharge device 102 can freely move. The packaging machine apparatus 100 thus provides for a facilitated and improved synchronization between the feed belt 101, the drive chain 103 and the discharge device 102, as described above in relation to Figs. 1 - 5.

The control unit 111 is further configured to align 208 the discharge device 102 with respect to the drive chain 103 to create a predetermined second overlapping trajectory 107 of the discharge device 102 and the drive chain 103, subsequent to creating said second path 106, thus providing for the advantageous synchronization described above.

As mentioned, the discharge device 100 may comprise elongated raiser units 108, 108', pivotally arranged around a periphery 112 of the discharge device 102. The control unit 111 may be configured to align 202 the elongated raiser units 108, 108', of the discharge device 100 by rotating the discharge device 102 to create said first path 104 between the elongated raiser units 108, 108'. It is conceivable that the raiser units 108, 108', may have various shapes and be arranged in various positions in relation to the discharge device 102 and the drive chain 103 while providing for the advantageous effects described above.

The drive chain 103 may comprise elongated conveyor units 109, 109', 109", being movable along the drive chain 103 to be able to move packaging material from the feed belt 101 to the elongated raiser units 108, 108'. As described above, in relation to e.g. Fig.1, the conveyor units 109, 109', 109", may be arranged to be freely movable between the elongated raiser units 108, 108', along said first path. It is conceivable that the conveyor units 109, 109', 109", may have various shapes and be arranged in various positions in relation to the discharge device 102 and the drive chain 103 while providing for the advantageous effects described above.

The feed belt 101 may comprise carriers 110 being movable along the feed belt 101. The carriers 110 may be configured to hold packaging material and to, in use, convey the packaging material from the carriers 110 to the elongated conveyor units 109, 109', 109", along the first overlapping trajectory 105.

As described in relation to Figs. 3 and 4, the raiser units 108, 108', may be arranged to be freely movable between the conveyor units 109, 109', along said second path 106.

The packaging machine apparatus 100 may comprise at least one sensor 113, 114, 115, configured to determine the position of the feed belt 101, the discharge device 102, and the drive chain 103. The at least one sensor 113, 114, 115, is may communicate with the control unit 111, and the control unit 111 may be configured to align the feed belt 101, the discharge device 102, and the drive chain 103, based on said position, determined by the at least one sensor 113, 114, 115. The control unit 111 may thus be configured to carry out the method 200 as described in relation to Figs. 1 - 5 above, with input data from the at least one sensor 113, 114, 115, detecting the current positions of the feed belt 101, the discharge device 102, and the drive chain 103. The method 200 may be a computer-implemented method for carrying out the steps 201 - 209, and the control unit 111 may also be configured to carry out such computer-implemented method. A computer program product is also provided comprising instructions which, when the program is executed by a computer, cause the computer to carry out the method 200. Figs. 2 and 4 illustrate one example where a sensor is coupled to each of the feed belt 101, the discharge device 102, the drive chain 103, and to the control unit 111. The packaging machine apparatus 100 may comprise corresponding drive units 113', 114', 115', connected to the control unit 111, and being configured to drive and align each of the feed belt 101, the discharge device 102, and the drive chain 103, as described in relation to the method 200 above, based on output data from the control unit 111, in order to achieve the improved and facilitated synchronization of the packaging machine apparatus 100.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A method (200) in a packaging machine apparatus (100), the packaging machine apparatus comprising a feed belt (101), a discharge device (102), and a drive chain (103) cooperating with, and arranged between, the feed belt and the discharge device, the method comprising
aligning (201) the discharge device with respect to the drive chain to create a first path (104), through the discharge device, along which the drive chain can freely move,
aligning (203) the drive chain with respect to the feed belt to create a predetermined first overlapping trajectory (105) of the drive chain and the feed belt,
aligning (205) the drive chain with respect to the discharge device, while maintaining said first overlapping trajectory, to create a second path (106) through the drive chain along which the discharge device can freely move.

2. Method according to claim 1, wherein following aligning the drive chain with respect to the discharge device while maintaining said first overlapping trajectory to create the second path through the drive chain along which the discharge device can freely move, the method comprises
aligning (208) the discharge device with respect to the drive chain to create a predetermined second overlapping trajectory (107) of the discharge device and the drive chain.

3. Method according to claim 1 or 2, wherein the aligning of the discharge device with respect to the drive chain to create the first path through the discharge device along which the drive chain can freely move comprises
aligning (202) elongated raiser units (108, 108') of the discharge device by rotating the discharge device to create said first path between the elongated raiser units.

4. Method according to any of claims 1 - 3, wherein aligning the drive chain with respect to the feed belt to create the predetermined first overlapping trajectory of the drive chain and the feed belt comprises
aligning (204) relative positions between elongated conveyor units (109, 109', 109") of the drive chain and carriers (110) of the feed belt so that packaging material can be conveyed from the carriers to the conveyor units along the first overlapping trajectory.

5. Method according to any of claims 1 - 4, wherein aligning the drive chain with respect to the discharge device, while maintaining said first overlapping trajectory, to create the second path through the drive chain along which the discharge device can freely move comprises
aligning (206) relative positions between elongated conveyor units (109) of the drive chain and elongated raiser units (108) of the discharge device by adjusting the position of the conveyor units along the drive chain to create said second path between the conveyor units.

6. Method according to claims 4 and 5, wherein maintaining the first overlapping trajectory comprises
moving (207) the carriers along with the adjusting of the position of the conveyor units so that packaging material can be conveyed from the carriers to the conveyor units along the first overlapping trajectory.

7. Method according to claim 2, wherein aligning the discharge device with respect to the drive chain to create the predetermined second overlapping trajectory of the discharge device and the drive chain comprises
aligning (209) relative positions between elongated raiser units (108, 108') of the discharge device and elongated conveyor units (109, 109') of the drive chain by rotating the discharge device so that packaging material can be conveyed from the conveyor units to the raiser units along the second overlapping trajectory.

8. A computer program product comprising instructions which, when the program is executed by a computer, cause the computer to carry out the steps of the method according to any of claims 1-7.

9. A packaging machine apparatus (100), comprising
a feed belt (101),
a discharge device (102),
a drive chain (103) cooperating with, and arranged between, the feed belt and the discharge device,
a control unit (111) configured to
align (201) the discharge device with respect to the drive chain to create a first path (104) through the discharge device along which the drive chain can freely move,
align (203) the drive chain with respect to the feed belt to create a predetermined first overlapping trajectory (105) of the drive chain and the feed belt,
align (205) the drive chain with respect to the discharge device, while maintaining said first overlapping trajectory, to create a second path (106) through the drive chain along which the discharge device can freely move.

10. Packaging machine apparatus according to claim 9, wherein the control unit is further configured to
align (208) the discharge device with respect to the drive chain to create a predetermined second overlapping trajectory (107) of the discharge device and the drive chain, subsequent to creating said second path.

11. Packaging machine apparatus according to claim 9 or 10, wherein the discharge device comprises elongated raiser units (108, 108') pivotally arranged around a periphery (112) of the discharge device, wherein the control unit is configured to
align (202) the elongated raiser units of the discharge device by rotating the discharge device to create said first path between the elongated raiser units.

12. Packaging machine apparatus according to claim 11, wherein the drive chain comprises elongated conveyor units (109, 109', 109") being movable along the drive chain to move packaging material from the feed belt to the elongated raiser units, the conveyor units being arranged to be freely movable between the elongated raiser units along said first path.

13. Packaging machine apparatus according to claim 12, wherein the feed belt comprises carriers (110) being movable along the feed belt, the carriers are configured to hold packaging material and to convey the packaging material from the carriers to the elongated conveyor units along the first overlapping trajectory.

14. Packaging machine apparatus according to claim 11, wherein the raiser units are arranged to be freely movable between the conveyor units along said second path.

15. Packaging machine apparatus according to any of claims 9 - 14, comprising at least one sensor (113, 114, 115) configured to determine the position of the feed belt, the discharge device, and the drive chain, wherein the control unit is configured to align the feed belt, the discharge device, and the drive chain, based on said position.
